(19) Europäisches Patentamt

European Patent Office

Office européen des brevets

(11) Numéro de publication: **0 233 167 B1**

(12) **FASCICULE DE BREVET EUROPEEN**

(45) Date de publication de fascicule du brevet:
**17.07.91**

(51) Int. Cl.⁵: **B62D 13/06**

(21) Numéro de dépôt: **87870003.8**

(22) Date de dépôt: **12.01.87**

(54) **Système de montage de bogies directionnels.**

(30) Priorité: **13.01.86 BE 216128**
**14.01.86 BE 216136**

(43) Date de publication de la demande:
**19.08.87 Bulletin 87/34**

(45) Mention de la délivrance du brevet:
**17.07.91 Bulletin 91/29**

(84) Etats contractants désignés:
**AT BE CH DE ES FR GB IT LI LU NL SE**

(56) Documents cités:
**FR-A- 787 583**
**FR-A- 849 808**
**FR-A- 2 000 439**
**FR-A- 2 595 312**

(73) Titulaire: **Ets JOSKIN S.A.**
**39, Rue de Wergifosse 39**
**B-4634 Soumagne(BE)**

(72) Inventeur: **Joskin, Victor**
**rue de Wergifosse 39**
**B-4634 Soumagne(BE)**

(74) Mandataire: **Dellicour, Paul**
**Office de Brevets E. Dellicour rue Fabry**
**18/012**
**B-4000 Liège(BE)**

Rank Xerox (UK) Business Services

## Description

La présente invention concerne le montage de deux essieux placés l'un derrière l'autre, dont au moins un est autovireur-suiveur ou directionnel et possède les caractéristiques définies dans le préambule de la revendication 1 et connues par exemple de FR-A-2000439.

On connaît actuellement des bogies tandem ou autre système de montage sur véhicule semi-porté avec deux essieux, dont un essieu est autovireur-suiveur ou directionnel en marche avant ou en marche avant et arrière, le second essieu étant toujours rigide et les articulations étant montées dans le même sens.

Par rapport à l'état de la technique, le but de l'invention est de créer un essieu autovireur-suiveur ou directionnel d'un montage aisé, de fonctionnement simple sans problème technique en marche avant et marche arrière et de prix compétitif.

Le système de montage suivant l'invention d'un bogie avec deux essieux dont au moins un est un essieu autovireursuiveur ou directionnel, du type dans lequel les roues sont montées pivotantes sur l'essieu grâce à des articulations d'axe vertical décalées par rapport aux axes de rotation desdites roues suivant la direction longitudinale du bogie, est caractérisé en ce que l'autre essieu est également un essieu autovireur-suiveur ou directionnel et en ce que les articulations des roues d'un essieu sont décalées en sens opposé par rapport aux articulations des roues de l'autre essieu.

Les articulations des deux essieux sont, suivant une réalisation de l'invention, tournées vers l'intérieur du système de montage. Suivant une variante de l'invention les articulations des deux essieux sont tournées vers l'extérieur du système de montage.

L'invention est décrite maintenant plus en détail sur la base du dessin annexé, à titre d'exemple uniquement, montrant le système en marche avant. On voit en :

Figure 1 une vue en plan d'un bogie suivant l'invention, l'essieu suiveur étant l'essieu arrière en marche avant, et

Figure 2 une variante de figure 1, où l'essieu suiveur est l'essieu avant pour la marche arrière.

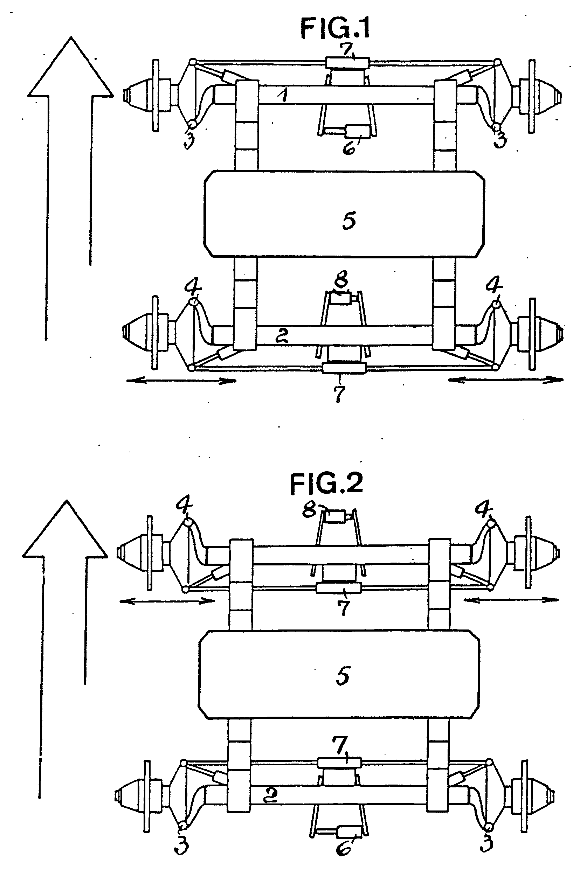

Comme on le voit dans la figure 1 les deux essieux 1, 2 sont montés avec leurs articulations, respectivement 3 et 4, tournées toutes deux vers l'intérieur du système de montage 5, donc en sens opposé l'une 3 par rapport à l'autre 4.

Pour la marche avant, à l'aide d'une commande à air ou hydraulique on bloque les articulations 3 par l'intermédiaire d'un vérin 6, d'une barre de direction et d'un mécanisme 7. En bloquant le vérin 6 on bloque le mécanisme suiveur de l'essieu avant 1 et on débloque automatiquement un vérin 8 libérant le mécanisme suiveur de l'essieu arrière 2 en permettant à cet essieu de travailler normalement.

Pour la marche arrière on débloque le vérin 6, qui lui-même débloque l'essieu avant 1 et les articulations 3 en libérant le mécanisme suiveur de cet essieu ; en même temps le vérin 8 est bloqué ainsi que l'essieu arrière 2, ses articulations 4 et son mécanisme suiveur. Le système suiveur fonctionne alors normalement en marche arrière.

Donc, en marche avant l'essieu arrière est suiveur et en marche arrière l'essieu avant est suiveur.

Dans une variante représentée dans la figure 2 les articulations 3, 4 sont toujours disposées en sens opposé mais tournées vers l'extérieur du système. Le principe de fonctionnement reste le même mais son application est inversée, en ce sens que, lors de la marche avant, seul l'essieu avant 1 agit en essieu suiveur et, lors de la marche arrière, seul l'essieu arrière 2 agit en essieu suiveur.

Les avantages d'un système tel que décrit ci-dessus consistent dans la simplicité du montage, dans la régularité du fonctionnement et dans une très bonne conduite sur route.

## Revendications

1. Système de montage d'un bogie avec deux essieux (1,2), dont au moins un est un essieu autovireur-suiveur ou directionnel, du type dans lequel les roues sont montées pivotantes sur l'essieu (1, 2) grâce à des articulations (3, 4) d'axe vertical décalées par rapport aux axes de rotation desdites roues suivant la direction longitudinale du bogie, caractérisé en ce que l'autre essieu est également un essieu autovireur-suiveur ou directionnel et en ce que les articulations (3) des roues d'un essieu (1) sont décalées en sens opposé par rapport aux articulations (4) des roues de l'autre essieu (2).

2. Système de montage suivant la revendication 1, caractérisé en ce que les articulations (3, 4) des deux essieux (1, 2) sont tournées vers l'intérieur du système (5).

3. Système de montage suivant la revendication 1, caractérisé en ce que les articulations (3, 4) des deux essieux (1, 2) sont tournées vers l'extérieur du système (5).

4. Système de montage suivant la revendication 1, caractérisé en ce qu'il comporte pour chaque essieu (1, 2) un vérin (6, 8) à commande pneumatique ou hydraulique, une barre de direction et un mécanisme (7), le vérin (6 ou 8) et l'articulation (3 ou 4) d'un des essieux (1 ou 2) étant automatiquement débloqués lorsque le vérin (8 ou 6) et l'articulation (4 ou 3) de l'autre essieu (2 ou 1) sont bloqués.

## Claims

1. Mounting system for swivelling bogies with two axles (1,2) of which at least one is an auto-steering/trailing or directional axle, of the type in which the wheels are mounted so as to pivot on the axles (1,2) owing to hinged points (3,4) having a vertical axis which is offset in relation to the axes of rotation of the said wheels in the longitudinal direction of the bogie, characterised in that the other axle is also an auto-steering/trailing or directional axle and in that the hinged points (3) of the wheels of one axle (1) are offset in the opposite direction in relation to the hinged points (4) of the wheels of the other axle (2).

2. Mounting system according to claim 1, characterised in that the hinged points (3,4) of the two axles (1,2) are turned towards the inside of the system (5).

3. Mounting system according to claim 1, characterised in that the hinged points (3,4) of the two axles (1,2) are turned towards the exterior of the system (5).

4. Mounting system according to claim 1, characterised in that it comprises, for each axle (1,2), a pneumatically or hydraulically controlled jack (6,8), a steering bar and a mechanism (7), the jack (6 or 8) and the hinged point (4 or 3) of one of the axles (1 or 2) being automatically released when the jack (8 or 6) and the hinged point (4 or 3) of the other axle is blocked.

## Patentansprüche

1. Montagesystem für ein Drehgestell mit zwei Achsen (1,2), von denen zumindest eine eine Selbstdreh- Führungs- oder Lenkachse eines Typs ist, bei dem die Räder mittels Achsgelenken (3,4), die bezogen auf die Drehachsen der besagten Räder in Längsrichtung des Drehgestells vertikal verschoben sind, schwenkbar auf der Achse (1, 2) montiert sind, **dadurch gekennzeichnet,** daß die andere Achse gleichfalls eine Selbstdreh- Führungs- oder Lenkachse ist und daß die Gelenke (3) der Räder der einen Achse (1) bezogen auf die Gelenke (4) der Räder der anderen Achse (2) in entgegengesetztem Sinne verschoben sind.

2. Montagesystem nach Anspruch 1, **dadurch gekennzeichnet,** daß die Gelenke (3, 4) der beiden Achsen (1, 2) zum System (5) hin gerichtet sind.

3. Montagesystem nach Anspruch 1, **dadurch gekennzeichnet,** daß die Gelenke (3, 4) der beiden Achsen (1, 2) vom System (5) weg gerichtet sind.

4. Montagesystem nach Anspruch 1, **dadurch gekennzeichnet,** daß es für jede Achse (1, 2) einen Druckzylinder (6, 8), eine Lenkspindelschubstange und ein Getriebe (7) umfaßt, wobei der Zylinder (6 oder 8) und das Gelenk (3 oder 4) eines der Achsen (1 oder 2) automatisch freigegeben werden, wenn der Zylinder (8 oder 6) und das Gelenk (4 oder 3) der anderen Achse (2 oder 1) blockiert sind.

## FIG.1

## FIG.2